# EUROPÄISCHE PATENTANMELDUNG

(11) **EP 1 920 905 A1**
(43) Veröffentlichungstag der Anmeldung: **14.05.2008**
(21) Anmeldenummer: 06023347.5
(22) Anmeldetag: 09.11.2006
(51) Int. Cl.: B29C 65/16

(54) **Verfahren zum läserschweissen von flächigen Materialien**

(71) Anmelder: ProLas GmbH, 52146 Würselen (DE)
(72) Erfinder: Hänsch, Dirk Dr., 4730 Hauset (BE); Albrich, Oliver, 52064 Aachen (DE)
(74) Vertreter: Paul, Dieter-Alfred

(57) **Zusammenfassung**

Die Erfindung betrifft ein Verfahren zum Laserschweißen von flächigen Materialien (5a, 5b), insbesondere von Folien und Textilien, bei dem mindestens zwei übereinander angeordnete Lagen (5a, 5b) aus dem flächigen Material gegeneinander gepresst und mit einem Laserstrahl (8) in einem Schweißbereich (9) verschweißt werden. Das Verfahren ist dadurc gekennzeichnet, daß die flächigen Materialien (5a, 5b) zumindest in dem Schweißbereich (9) mit wenigstens einem Gasstrom (6) gegeneinander gepresst werden.

Die Erfindung betrifft weiterhin eine Vorrichtung zur Durchführung dieses Verfahrens.

## Beschreibung

Die Erfindung betrifft eine Verfahren zum Laserschweißen von flächigen Materialien, insbesondere von Folien und Textilien, bei dem wenigstens zwei übereinander angeordnete Lagen aus den flächigen Materialien gegeneinander gepresst und mit einem Laserstrahl in einem Schweißbereich verschweißt werden. Weiterhin betrifft die Erfindung eine vorrichtung zur Durchführung des Verfahrens.

Im Stand der Technik sind Verfahren zum Laserschweißen von Folien bekannt. Dabei werden zwei Folien übereinander angeordnet und in einem Schweißbereich von einem Laserstrahl, dessen Energie zumindest teilweise von den Folien absorbiert wird, aufgeschmolzen und verschweißt. Dabei müssen die Folien zumindest in dem Schweißbereich gegeneinander gepresst werden, um eine sichere Verbindung des aufgeschmolzenen Folienmaterials zu gewährleisten.

Bei den im Stand der Technik verwendeten Verfahren werden die Folien während des Schweißens durch Presselemente, die einen Pressspalt zwischen sich bilden, gegeneinander gepresst. Als Presselemente kommen beispielsweise Pressrollen oder Pressplatten zum Einsatz. Ein derartiges verfahren ist in der EP 1 366 890 A1 beschrieben.

Nachteile der bekannten Verfahren sind, dass diese nur für die Herstellung von Nahtgeometrien eines jeweils festgelegten Typs geeignet sind. So müssen beispielsweise für plane Nahtgeometrien andere Verfahren als für gewölbte Nahtgeometrien eingesetzt werden. Insbesondere müssen jeweils an die Nahtgeometrie angepasste Presselemente verwendet werden. Außerdem ist das Verschweißen von komplexen dreidimensional ausgebildeten Folien aufwendig, da auch hier geeignete Presselemente nötig sind. Damit sind die bekannten Verfahren in vielfacher Hinsicht hinsichtlich der Möglichkeit verschiedene auch dreidimensionale Nahtgeometrien auszubilden beschränkt. Zuletzt können die Folien durch den Einsatz der Presselemente mechanisch beschädigt werden.

Es ist daher Aufgabe der vorliegenden Erfindung, ein Verfahren der Eingangs genannten Art so auszubilden, dass flächige Materialien mit unterschiedlichster Nahtgeometrie ohne die Gefahr einer mechanischen Beschädigung miteinander verschweißt werden können.

Diese Aufgabe wird erfindungsgemäß dadurch gelöst, dass die flächigen Materialien zumindest in dem Schweißbereich mit wenigstens einem Gasstrom gegeneinander gepresst werden.

Grundgedanke der Erfindung ist es also, wenigstens einen Gasstrom zu verwenden, um die flächigen Materialien gegeneinander zu pressen. Vorteile sind hierbei, dass die flächigen Materialien berührungslos gegeneinander gepresst werden können und somit eine mechanische Beschädigung vermieden werden kann. Außerdem passt sich der Gasstrom automatisch der Kontur der zu verschweißenden flächigen Materialien an, so dass auf einfache weise flächige Materialien mit unterschiedlichster Nahtgeometrie verschweißt werden können. Besonders vorteilhaft ist, dass die herzustellende Nahtgemetrie nicht durch die Form eines zu verwendenden Presselements begrenzt ist.

Gemäß einer ersten Ausführungsform der Erfindung ist vorgesehen, dass die flächigen Materialien mit wenigstens einem Gasstrom, welcher an der gleichen Stelle wie der Laserstrahl auf die flächigen Materialien trifft, gegeneinander gepresst werden. Auf diese Weise können die flächigen Materialien im Schweißbereich einfach gegeneinander gepresst werden. Dadurch, dass lediglich in dem unmittelbaren Schweißbereich, d.h. dem Auftreffbereich des Lasers gepresst wird, können flächige Materialien mit unterschiedlichster Nahtgeometrie verschweißt werden.

Die flächigen Materialien können auch mit mehreren Gasströmen, die von ringförmig um den Laserstrahl herum angeordneten Gasstrom-Erzeugern abgegeben werden und die an der gleichen Stelle wie der Laserstrahl auf die flächigen Materialien treffen, gegeneinander gepresst werden. Auf diese Weise ist es insbesondere möglich, die Querkraftkomponenten der einzelnen Gasströme auszugleichen und so ein Verrutschen oder Verschieben der Materialien zu verhindern.

Es ist ebenfalls möglich, dass die flächigen Materialien mit mehreren Gasströmen flächig gegeneinander gepresst werden. Hierdurch kann sichergestellt werden, dass insbesondere bei langsam aushärtendem Material der Druck auf die flächigen Materialien nach dem Schweißen ausreichend lange aufrecht erhalten wird, um die Ausbildung einer stabilen Schweißnaht zu gewährleisten.

Weiterhin können die flächigen Materialien mit dem Gasstrom gegeneinander auf eine Unterlage, auf der die untere Lage aus dem flächigen Material zumindest im Schweißbereich aufliegt, gepresst werden. Die Unterlage kann verschieden Formen und Größen haben, wobei es ausreichend ist, wenn sie die Größe des Schweißbereiches hat. Durch die Verwendung der Unterlage kann auf einfache weise ein widerlager für den Gasstrom bereitgestellt werden. Außerdem kann durch eine geeignete Wahl der Form der Unterlage auch die Geometrie der auszubildenden Schweißnaht beeinflusst werden. Die Verwendung der Unterlage gewährleistet einen hohen Anpressdruck, indem sie als Widerlager dient.

Gemäß einer alternativen Ausführungsform können die flächigen Materialien von Gasströmen, die paarweise auf gegenüber liegenden Seiten der oberen und unteren Lagen auftreffen, gegeneinander gepresst werden. Dies ermöglicht eine besonders gute Anpassung an verschiedenste Formen bei gleichzeitig hohem Anpressdruck.

Die flächigen Materialien können auch keilförmig zusammengeführt werden. Dann kann der Laserstrahl von der offenen Endseite des Keils gegen die Keilspitze, wo die Materialien zusammentreffen, gerichtet werden. Im Ergebnis werden beide Lagen aus den flächigen Materialien von dem Laser in dem Schweißbereich gleichzeitig getroffen, so dass es möglich ist, auch zwei Laserstrahlung absorbierende Materialien wie etwa strahlungsundurchlässige Textilien zu verschweißen.

Als Gasströme können Gasströme verschiedener nicht brennbarer Gase eingesetzt werden. Dabei kann im einfachsten Fall Druckluft verwendet werden. Alternativ können beispielsweise Gase wie CO₂, N₂ oder verschiedene Edelgase benutzt werden.

Die Gasströme können auch temperiert werden. So können sie beispielsweise erhitzt werden, um ein schnelleres Aufschmelzen der zu verschweißenden Materialien zu ermöglichen. Außerdem kann auch der Druck der Gasströme geregelt werden. Auf diese Weise ist es möglich, den Anpressdruck zu steuern.

Die Aufgabe wird ebenfalls durch eine Vorrichtung mit den Merkmalen des Anspruch 12 gelöst. Vorteilhafte Ausführungsformen sind in den Unteransprüchen beschrieben.

Insbesondere ist vorgesehen, dass die Vorrichtung eine Optik zum Fokussieren bzw. Ausrichten des Laserstrahls aufweist, wobei an der Optik der Gasstrom-Erzeuger angebracht ist. Bei dieser Ausführungsform ist es möglich, die Optik und den Gasstrom-Erzeuger gleichzeitig zu bewegen, wobei der Laserstrahl des Lasers und der Gasstrom des Gasstrom-Erzeugers ihre relative Ausrichtung beibehalten.

Die Erfindung wird im Folgenden an Hand von Ausführungsbeispielen mit Bezug auf die Zeichnungen detaillierter beschrieben. In den Zeichnungen zeigen:
- Figur 1: eine schematische Darstellung einer ersten erfindungsgemäßen Vorrichtung zum Laserschweißen von flächigen Materialien,
- Figur 2: eine schematische Darstellung einer zweiten erfindungsgemäßen Vorrichtung zum Laserschweißen von flächigen Materialien, und
- Figur 3: eine schematische Darstellung einer dritten erfindungsgemäßen Vorrichtung zum Laserschweißen von flächigen Materialien.

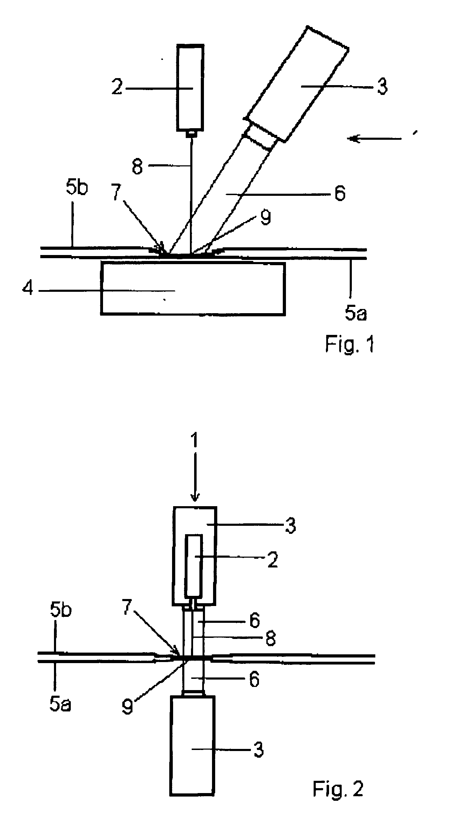

In der Figur 1 ist eine erste erfindungsgemäße Vorrichtung zum Schweißen von flächigen Materialien schematisch dargestellt. Die Vorrichtung weist eine Presseinrichtung 1 und einen Laser 2 auf. Die Press-einrichtung 1 besteht aus einem Gasstrom-Erzeuger 3 und einer Unterlage 4. Auf der Unterlage 4 sind zwei deckend übereinander angeordnete Folien 5a, 5b angeordnet. Alternativ können jedoch auch andere flächige Materialien wie beispielsweise Textilien verschweißt werden. Die Folien 5a, 5b bestehen aus einem zumindest teilweise Laserstrahlung absorbierenden thermisch schmelzbaren Material. Der Gasstrom-Erzeuger 3 gibt einen Gasstrom 6, hier bestehend aus Druckluft, in Richtung der Folien 5a, 5b ab. Dabei bilden der Gasstrom 5 und die Unterlage 4 zwischen sich einen Pressspalt 7 für die Folien 5a, 5b aus. Im Bereich des Pressspalts 7 werden die Folien 5a, 5b durch den Druck des auftreffenden Gasstroms 6 gegeneinander gepresst, wobei die Unterlage 4 als Widerlager dient.

Der Laser 2 gibt einen Laserstrahl 8 in Richtung des Pressspalts 7 ab. Der Laserstrahl 8 hat eine geeignete Wellenlänge und Energie, um zumindest teilweise von den Folien 5a, 5b unter Erwärmung dem Schweißbereich 9 absorbiert zu werden.

Der Gasstrom-Erzeuger 3 kann zusätzlich eine Temperier-Einrichtung oder eine Steuereinrichtung zum Steuern des Drucks des Gasstroms 6 aufweisen.

Um mit der erfindungsgemäßen Vorrichtung die Folien 5a, 5b zu verschweißen, werden sie in dem Schweißbereich 9 gegeneinander gepresst. Dazu wird von dem Gasstrom-Erzeuger 3 der Gasstrom 6 mit einem geeigneten Druck erzeugt und in Richtung der Folien 5a, 5b abgegeben. Der Gasstrom 6 trifft auf die obere Folie 5b auf und presst diese unter Deformation gegen die untere Folie 5a, die auf der Unterlage 4 aufliegt. Die Unterlage 4 sorgt hier dafür, dass ein genügend großer Anpressdruck erzeugt werden kann, indem sie als Widerlager dient.

Gleichzeitig mit diesem Anpressprozess wird von dem Laser 2 der Laserstrahl 8 in Richtung der Folien 5a, 5b abgegeben. Der Laserstrahl trifft in dem Schweißbereich 9 innerhalb des Pressspalts 7 auf die Folien 5a, 5b auf und dringt in diese ein. Dabei wird zumindest ein Teil seiner Energie von den Folien 5a, 5b im Schweißbereich 9 absorbiert, was zu einer Erwärmung des Folienmaterials bis hin zum Aufschmelzen führt. Das geschmolzene Folienmaterial der Folien 5a, 5b wird durch den Anpressdruck des Gasstromes 6 gegeneinander gepresst, was zu dessen Verbindung führt. Dabei entsteht eine nicht gezeigte Schweißnaht. Nachdem der Laser 2 abgeschaltet worden ist oder auf einen weiteren zu verschweißenden Bereich der Folien 5a, 5b fokussiert wurde, kühlt das Folienmaterial der Schweißnaht unter Erstarrung ab.

vorteilhaft ist, dass eine mechanische Beschädigung der Folie 5a, 5b weitestgehend ausgeschlossen ist. Außerdem passt sich der Gasstrom automatisch der Kontur der zu verschweißenden Folien an, so dass auf einfache Weise Folien mit unterschiedlichsten Nahtgeometrien verschweißt werden können.

In der Figur 2 ist eine zweite erfindungsgemäße Vorrichtung zum Verschweißen von Folien gezeigt. Teile der Vorrichtung, die identisch mit Teilen der Vorrichtung der Figur 1 sind, sind mit gleichen Bezugszeichen versehen. Es werden im Folgenden lediglich die Unterschiede zu der Vorrichtung der Figur 1 beschrieben.

Die Presseinrichtung 1 weist hier anstelle der Unterlage 4 einen zweiten unteren Gasstrom-Erzeuger 3b auf, der einen unteren Gasstrom 6b in Richtung der Folien 5a, 5b abgibt. Der untere Gasstrom 6b strömt dabei in die entgegengesetzte Richtung zu dem oberen Gasstrom 6a. Die beiden Gasströme 6a, 6b treffen auf gegenüberliegenden Oberflächen der Folien 5a, 5b auf und bilden so den Pressspalts 7 zwischen sich aus, in dem die Folien 5a, 5b gegen einander gepresst sind.

Weiterhin ist hier der Laser 2 innerhalb des oberen Gasstrom-Erzeugers 3a angeordnet. Der Laser gibt seinen Laserstrahl 8 innerhalb des oberen Gasstroms 6a ab.

Beim Verschweißen werden von den beiden paarweise angeordneten Gasstrom-Erzeugern 3a, 3b die Gasströme 6a, 6b in Richtung der Folien 5a, 5b abgegeben. Beim Auftreffen der Gasströme 6a, 6b auf die Oberflächen der Folien 5a, 5b werden diese im Pressspalt 7 gegen einander gepresst.

Die weiteren Schritte des Verschweißens erfolgen dann in der oben beschriebenen Weise.

Vorteilhaft ist, dass eine mechanische Beschädigung der Folie 5a, 5b weitestgehend ausgeschlossen ist. Außerdem passt sich der Gasstrom / die Gasströme automatisch an die Kontur der zu verschweißenden Folien an, so dass auf einfache Weise Folien mit Nahtgemetrien unterschiedlichster Form verschweißt werden können.

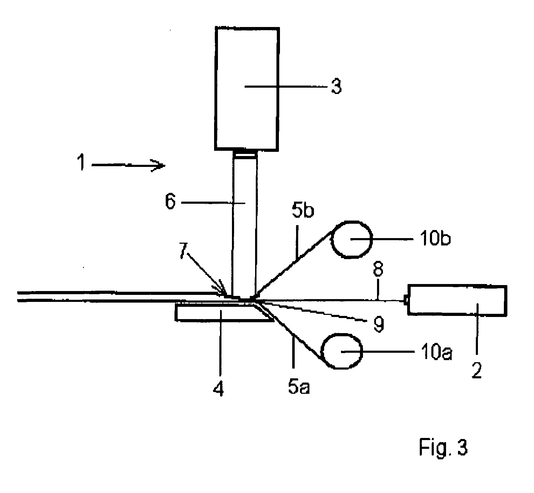

In der Figur 3 ist eine dritte erfindungsgemäße Vorrichtung zum Verschweißen von flächigen Materialien gezeigt. Sie stimmt in den wesentlichen Teilen mit der Vorrichtung der Figur 1 überein, wobei diese Teile mit denselben Bezugszeichen versehen sind. Die Vorrichtung der Figur 3 weist zusätzlich zwei zuführ-rollen 10a, 10b für die zu verschweißenden Materialbahnen 5a, 5b auf. Die Zuführrollen 10a, 10b sind so angeordnet, dass die flächigen Materialien 5a, 5b im Schweißbereich keilförmig zusammengeführt werden.

Der Laser 2 der Vorrichtung ist hier an der offenen Keilendseite angeordnet, so dass der von ihm angegebene Laserstrahl an der Keilspitze gleichzeitig auf die flächigen Materialien 5a, 5b trifft. Dabei werden beide Materialien 5a, 5b aufgeschmolzen und verschweißt.

Diese Vorrichtung eignet sich insbesondere dafür, zwei flächige Materialien 5a, 5b, die beide Laserstrahlung absorbieren, zu verschweißen. Dabei kann es sich beispielsweise um Textilien handeln.

Bei allen Schweißvorrichtungen können der Laser 2 und die Gasstrom-Erzeuger 2 verfahren werden, um Schweißnähte in gewünschter Form herzustellen. Dabei können der Laser 2 oder die zugehörige Optik und der Gasstrom-Erzeuger gekoppelt sein, so dass sie gemeinsam verfahren werden können.

## Patentansprüche

1. Verfahren zum Laserschweißen von flächigen Materialien (5a, 5b), insbesondere von Folien und Textilien, bei dem mindestens zwei übereinander angeordnete Lagen (5a, 5b) aus dem flächigen Material gegeneinander gepresst und mit einem Laserstrahl (8) in einem Schweißbereich (9) verschweißt werden, **dadurch gekennzeichnet, dass** die flächigen Materialien (5a, 5b) zumindest in dem Schweißbereich (9) mit wenigstens einem Gasstrom (6) gegeneinander gepresst werden.

2. Verfahren nach Anspruch 1, **dadurch gekennzeichnet, dass** die flächigen Materialien (5a, 5b) mit wenigstens einem Gasstrom (6), welcher an der gleichen Stelle wie der Laserstrahl (8) auf die flächigen Materialien (5a, 5b) trifft, gegeneinander gepresst werden.

3. Verfahren nach Anspruch 2, **dadurch gekennzeichnet, dass** die flächigen Materialien (5a, 5b) mit mehreren Gasströmen (6), die von ringförmig um den Laserstrahl (8) herum angeordneten Gasstrom-Erzeugern (3) abgegeben werden und die an der gleichen Stelle wie der Laserstrahl (8) auf die flächigen Materialien (5a, 5b) treffen, gegeneinander gepresst werden.

4. Verfahren nach Anspruch 1, **dadurch gekennzeichnet, dass** die flächigen Materialien (5a, 5b) mit mehreren Gasströmen (6) flächig gegeneinander gepresst werden.

5. Verfahren nach einem der vorhergehenden Ansprüche, **dadurch gekennzeichnet, dass** die flächigen Materialien (5a, 5b) von dem Gasstrom (6) gegeneinander auf einer Unterlage (4), auf der die untere Lage (5a) aus dem flächigen Material zumindest im Schweißbereich (9) aufliegt, gepresst werden.

6. Verfahren nach einem der Ansprüche 1 bis 4, **dadurch gekennzeichnet, dass** die flächigen Materialien (5a, 5b) von Gasströmen (6a, 6b), die paarweise auf gegenüber liegenden Seiten der oberen und unteren Lagen (5a, 5b) auftreffen, gegeneinander gepresst werden.

7. Verfahren nach einem der vorhergehenden Ansprüche, **dadurch gekennzeichnet, dass** die flächigen Materialien (5a, 5b) im Schweißbereich (9) keilförmig zusammengeführt werden und der Laserstrahl (8) von der offenen Endseite des Keils gegen die Keilspitze, wo die Materialien zusammentreffen, gerichtet wird, so dass er gleichzeitig auf die flächigen Materialien (5a, 5b) trifft.

8. Verfahren nach einem der vorhergehenden Ansprüche, **dadurch gekennzeichnet, dass** als Gasstrom (6) ein Gasstrom (6) eines nicht brennbaren Gases verwendet werden.

9. Verfahren nach einem der vorhergehenden Ansprüche, **dadurch gekennzeichnet, dass** als Gasstrom (6) ein Druckluftstrom verwendet wird.

10. verfahren nach einem der vorhergehenden Ansprüche, **dadurch gekennzeichnet, dass** die Temperatur des Gasstroms (6) geregelt wird.

11. verfahren nach einem der vorhergehenden Ansprüche, **dadurch gekennzeichnet, dass** der Druck des Gasstroms (6) geregelt wird.

12. Vorrichtung zum Laserschweißen von flächigen Materialien (5a, 5b), insbesondere von Folien und Textilien, mit einer Presseinrichtung (1), um wenigstens zwei übereinander angeordnete Lage (5a, 5b) aus den flächigen Materialien gegeneinander zu pressen, und einem Laser (2), um die flächigen Materialien (5a, 5b) in einem Schweißbereich (9) zu verschweißen, **dadurch gekennzeichnet, dass** die Presseinrichtung (2) wenigstens einen Gasstrom-Erzeuger (3) zur Abgabe wenigstens eines Gasstromes (6) in Richtung des Schweißbereichs (9) aufweist.

13. Vorrichtung nach Ansprüche 12, **dadurch gekennzeichnet, dass** der Gasstrom-Erzeuger (3) so angeordnet ist, dass der von ihm abgegebene Gasstrom (6) an der gleichen Stelle wie ein von dem Laser (2) abgegebener Laserstrahl (8) auf die flächigen Materialien (5a, 5b) trifft.

14. Vorrichtung nach Anspruch 12, **dadurch gekennzeichnet, dass** mehrere Gasstrom-Erzeuger (3) so ringförmig angeordnet sind, dass die von ihnen abgegebenen Gasströme (6) an der gleichen Stelle wie ein von dem Laser abgegebener Laserstrahl (8) auf die flächigen Materialien (5a, 5b) treffen.

15. Vorrichtung nach Anspruch 12, **dadurch gekennzeichnet, dass** die Presseinrichtung (1) mehrere Gasstrom-Erzeuger (3) aufweist, die so angeordnet sind, dass die von ihnen abgegebenen Gasströme (6) flächig verteilt auf den flächigen Materialien (5a, 5b) auftreffen.

16. Vorrichtung nach einem der Ansprüche 12 bis 15, **dadurch gekennzeichnet, dass** die Presseinrichtung (1) eine Unterlage (4) aufweist, auf der die untere Lage (5a) aus dem flächigen Material zumindest in dem Schweißbereich (9) aufliegt, wobei der Gasstrom-Erzeuger (3) so angeordnet ist, dass der von ihm abgegebene Gasstrom (6) und die Unterlage (4) zwischen sich einen Pressspalt (7) für die übereinander angeordneten flächigen Materialien (5a, 5b) ausbilden.

17. Vorrichtung nach einem der Ansprüche 12 bis 15, **dadurch gekennzeichnet, dass** die Presseinrichtung (1) paarweise angeordnete Gasstrom-Erzeuger (3a, 3b) aufweist, wobei jeweils ein Gasstrom-Erzeuger (3a, 3b) einen Gasstrom (6a, 6b) in Richtung des andern Gasstrom-Erzeugers (3a, 3b) abgibt, so dass die Gasstrom-Erzeuger (3a, 3b) zwischen sich einen Pressspalt (7) für die flächigen Materialien (5a, 5b) ausbilden.

18. Vorrichtung nach einem der vorhergehenden Ansprüche, **dadurch gekennzeichnet, dass** sie für jedes flächige Material (5a, 5b) eine Zuführeinrichtung (10a, 10b) aufweist, wobei die Zuführeinrichtungen (10a, 10b) so angeordnet sind, dass die flächigen Materialien (5a, 5b) im Schweißbereich (9) keilförmig zusammengeführt werden, und wobei der Laser (2) so angeordnet ist, dass ein von dem Laser (2) abgegebener Laserstrahl (8) gleichzeitig auf die flächigen Materialien (5a, 5b) trifft.

19. Vorrichtung nach einem der Ansprüche 12 bis 18, **dadurch gekennzeichnet, dass** der Gasstrom-Erzeuger (3) ausgebildet ist einen oder mehrere Gasströme (6) aus einem nicht brennbaren Gas abzugeben.

20. Vorrichtung nach einem der Ansprüche 13 bis 19, **dadurch gekennzeichnet, dass** der Gasstrom-Erzeuger (3) ausgebildet ist einen oder mehrere Druckluftströme abzugeben.

21. Vorrichtung nach einem der Ansprüche 12 bis 20, **dadurch gekennzeichnet, dass** sie eine Optik zum Fokussieren des Laserstrahls (8) aufweist, wobei an der Optik der Gasstrom-Erzeuger (3) angebracht ist.

22. Vorrichtung nach einem der vorhergehenden Ansprüche, **dadurch gekennzeichnet, dass** jeder Gasstrom-Erzeuger (3) eine Temperier-Einrichtung zum Temperieren des Gasstroms (6) aufweist.

23. Vorrichtung nach einem der vorhergehenden Ansprüche, **dadurch gekennzeichnet, dass** jeder Gasstrom-Erzeuger (3) eine Steuereinrichtung zum Steuern des Drucks des Gasstroms (6) aufweist.
